# EUROPÄISCHE PATENTSCHRIFT

(11) **EP 1 153 726 B1**
(45) Veröffentlichungstag und Bekanntmachung des Hinweises auf die Patenterteilung: **27.09.2006**
(21) Anmeldenummer: 01110641.6
(22) Anmeldetag: 02.05.2001
(51) Int. Cl.: B29C 45/14

(54) **Isolierung von Statorwicklungen im Spitzgussverfahren**
Insulation of stator windings by injection moulding
Isolation d'enroulements de stator par moulage par injection

(30) Priorität: 12.05.2000 DE 10023208
(43) Veröffentlichungstag der Anmeldung: 14.11.2001
(73) Patentinhaber: Alstom Technology Ltd, 5400 Baden (CH)
(72) Erfinder: Bock, Albrecht, 79801 Hohentengen (DE); Baumann, Thomas, Dr., 5430 Wettingen (CH); Oesterheld, Jörg, Dr., 5413 Birmenstorf (CH)

(56) Entgegenhaltungen:
- EP-A- 0 923 188
- AT-B- 264 653
- DE-A- 19 860 412
- US-A- 5 115 556
- PATENT ABSTRACTS OF JAPAN vol. 009, no. 321 (E-367), 17. Dezember 1985 (1985-12-17) & JP 60 154514 A (MITSUBISHI DENKI KK), 14. August 1985 (1985-08-14)

## Beschreibung

### Technisches Gebiet

Die Erfindung betrifft ein Verfahren zur Isolierung von Statorwicklungen für rotie-rende elektrische Maschinen, insbesondere für Gleichstrommaschinen und Wechselstrommaschinen.

### Stand der Technik

Im allgemeinen weisen derartige elektrische Maschinen einen Stator und einen Rotor auf, um mechanische Energie in elektrische Energie umzuwandeln (Generator) oder, um umgekehrt, elektrische Energie in mechanische Energie umzuwandeln (Elektromotor). In den Leitern der Statorwicklungen werden, je nach Betriebszustand der elektrischen Maschine, Spannungen erzeugt. Daher müssen die Leiter der Statorwicklungen entsprechend isoliert werden, um einen Kurzschluß zu vermeiden.

Statorwicklungen in elektrischen Maschinen können unterschiedlich aufgebaut sein. Es besteht die Möglichkeit mehrere gegeneinander isolierte Einzelleiter zu bündeln und das so entstandene Leiterbündel, welches oft als Leiterstab bezeichnet wird, mit einer sogenannten Hauptisolierung zu versehen. Zur Herstellung der Statorwicklungen werden mehrere Leiterstäbe an ihren Stirnflächen miteinander verbunden. Diese Verbindung kann beispielsweise über eine Metallplatte erfolgen, an die sowohl die jeweils isolierten Einzelleiter des ersten Leiterstabs als auch die jeweils isolierten Einzelleiter des zweiten Leiterstabs leitend angeschlossen werden. Daher sind die Einzelleiter des Leiterstabes im Bereich der Metallplatte nicht voneinander isoliert.

Alternativ zur Bündelung der Einzeleiter in Leiterstäbe wird ein langer, isolierter Einzelleiter zu einer ebenen, ovalen Spule gewickelt, die Spulenurform oder Fisch genannt wird (AT-B-264653). In einem anschließenden Vorgang, der sogenannten Spreizung, werden die Spulenurformen bzw. Fische in ihre endgültige Form überführt und in den Stator eingebaut.

In beiden oben beschriebenen Fertigungstechniken können sowohl runde als auch rechteckige Einzelleiter eingesetzt werden. Die für die Statorwicklungen aus mehreren Einzelleitern gefertigten Leiterstäbe bzw. Spulenurformen können wiederum jeweils runde bzw. rechteckige Querschnitte haben. In der vorliegenden Erfindung werden bevorzugt Leiterstäbe bzw. Spulenurformen mit rechteckigem Querschnitt, die aus rechteckigen Einzelleitern gefertigt wurden, betrachtet. Die Leiterstäbe können sowohl verroebelt sein d.h. mit gegeneinander verdrillten Einzelleitern, als auch nicht verroebelt sein d.h. mit unverdrillten, zueinander parallel verlaufenden Einzelleitern.

Gemäß dem Stand der Technik wird zur Isolierung der Statorwicklungen (z.B. Leiterstäbe, Spulenurformen, Spulen) in der Regel Glimmerpapier, welches aus mechanischen Gründen durch einen Glasgewebeträger verstärkt ist, in Bandform um den Leiter gewickelt. Anschließend wird der umwickelte Leiter, welcher gegebenenfalls nach der Bewicklung noch verformt wird, mittels eines aushärtenden Harzes imprägniert, was zu einer duroplastischen, nicht schmelzbaren Isolierung führt. Es sind ferner glimmerhaltige Isolierungen mit thermoplastischer Matrix bekannt, die ebenfalls in Bandform auf den Leiter aufgebracht werden, wie beispielsweise Asphalt, Schellack (Brown Boveri Review Vol. 57, S. 15: R. Schuler; "Insulation Systems for High-Voltage Rotating Machines") Polysulfon und Polyetheretherketon (DE 43 44044 A1, EP-A-0823188). Diese Isolierungen sind oberhalb der Schmelztemperatur der Matrix wieder plastisch verformbar.

Diese durch Umwickeln aufgebrachten Isolierungen von Statorwicklungen weisen den Nachteil auf, daß Ihre Fertigung zeit- und kostenintensiv ist. In diesem Zusammenhang sind der Wickelprozeß und der Imprägnierprozeß besonders zu erwähnen, welche aufgrund der physikalischen Eigenschaften des Glimmerpapieres und des Imprägnierharzes nicht mehr wesentlich beschleunigt werden können. Ferner ist dieser Fertigungsprozeß gerade bei dicken Isolierungen fehleranfällig, wenn sich das Glimmerpapier nur unzureichend an die Statorwicklung anpaßt. Insbesondere können durch eine ungenügende Justierung der Wickelmaschine nach dem Umwickeln der Statorwicklung in dem Glimmerpapier Falten und Risse auftreten, beispielsweise durch einen zu steilen oder zu flachen Winkel zwischen dem Glimmerpapier und dem Leiter oder durch eine ungeeignete statische oder dynamische Zugkraft, welche beim Umwickeln auf das Glimmerpapier wirkt. Ferner kann es durch zu großen Bandauftrag zu Überpressungen kommen, die eine gleichmäßige Durchimprägnierung der Isolierung in der Imprägnierform verhindern. Somit kann eine lokal oder allgemein fehlerhafte Isolierung erzeugt werden, welche eine reduzierte Kurzzeit- und/oder Langzeitfestigkeit aufweist. Dies setzt die Lebensdauer von derartigen Isolierungen für Statorwicklungen erheblich herab.

Mit der AT-B-264653 wurde eine Lösung zur Isolation von Leiterspulen vorgestellt, bei welcher ein Einzelleiter in eine Spulenform gewickelt wird. Die durch Tränklack oder andere übliche Mittel zusammengehaltene Spule wird in eine Gussform eingelegt und dort mittels Halte- und Zentriervorrichtungen festgelegt. Nach Verschliessen der Gussform werden die Hohlräume um die Spule mit einem Elastomer ausgefüllt. Danach erfolgt ein Zurückziehen der Halte- und Zentriervorrichtungen und in die dadurch entstandenen Hohlräume wird weiteres Elastomer eingebracht. Schliesslich wird die Spule in der Gussform ausgehärtet.

Gemäss Abstract der JP-A-60154514 werden bei der Isolierung von Rotorspulen elektrischer Maschinen Abstandshalter aus Giessharz verwendet, welche in das zum Aufbau der Isolierung verwendete Giessharz eingegossen werden.

Ferner sind aus der Kabeltechnik Herstellungsverfahren zur Ummantelung von Leiterbündeln bekannt, wobei stets Leiterbündel mit rundem Querschnitt in einem Extrusionsprozeß mit einem Thermoplast oder mit Elastomeren ummantelt werden. Die Druckschrift US-A-5,650,031, welche den gleichen Gegenstand wie die WO 97/11831 betrifft, beschreibt ein derartiges Verfahren zur Isolierung von Statorwicklungen, bei welchem die Statorwicklung durch eine zentrale Bohrung eines Extruders geführt wird. Dabei wird die Statorwicklung, welche eine komplexe Form aufweist, mit einem extrudierten thermoplastischen Material gleichzeitig an jeder Seite der komplexen Form insbesondere durch eine Ko-Extrusion ummantelt.

Des weiteren sind in der Kabeltechnik polymere Isolierungen bekannt, welche auf die Kabel mittels einer Warmschrumpftechnik aufgebracht werden. Es handelt sich dabei um vorfabrizierte Schläuche mit rundem Querschnitt aus vernetzbaren Thermoplasten, Elastomeren, Polyvinylidenfluorid, PVC, Silikonelastomer oder Teflon. Diese Materialien werden nach der Fabrikation im erwärmten Zustand gedehnt und abgekühlt. Nach der Abkühlung behält das Material seine gedehnte Form bei. Dies geschieht beispielsweise dadurch, daß sich kristalline Zentren bilden, welche die gestreckten Makromoleküle fixieren. Nach erneuter Erwärmung über den kristallinen Schmelzpunkt hinaus lösen sich die kristallinen Zonen auf, wobei die Makromoleküle wieder ihren ungedehnten Zustand einnehmen und somit die Isolierung aufgeschrumpft wird. Ferner sind Kaltschrumpf-Schläuche bekannt, die im kalten Zustand mechanisch aufgeweitet werden. Im aufgeweiteten Zustand werden diese Schläuche über eine Stützkonstruktion gezogen, welche die Schläuche dauerhaft im gedehnten Zustand hält. Nachdem die Schläuche über die zu isolierenden Bauteile geschoben und fixiert worden sind, wird die Stützkonstruktion in geeigneter Weise entfernt, beispielsweise durch Herausziehen einer spiralförmig perforierten Stützkonstruktion. Derartige Schrumpftechniken können jedoch bei Statorwicklungen mit rechteckigem Querschnitt nicht verwendet werden, da die Schläuche mit rundem Querschnitt an den Kanten der rechteckigen Leiter entweder unmittelbar nach dem Schrumpfen oder nach einer kurzen Belastung während des Betriebs der elektrischen Maschine aufgrund der thermischen und mechanischen Beanspruchung leicht reißen.

Bereits bei der Herstellung der Statorwicklungen, insbesondere beim Biegen der Leiter, und beim Handling, insbesondere beim Einbau in den Stator, muß die Isolierung eine beachtlich hohe mechanische Beanspruchung verkraften, welche die Isolierung der Statorwicklungen beschädigen kann. Darüber hinaus unterliegt die Isolierung der Statorwicklungsleiter beim Betrieb der elektrischen Maschine einer kombinierten Beanspruchung. Einerseits wird die Isolierung zwischen dem Leiter, an welchem eine hohe Spannung anliegt, und dem Stator durch ein resultierendes elektrisches Feld dielektrisch beansprucht. Andererseits ist die Isolierung durch die im Leiter erzeugte Wärme einer thermischen Wechselbeanspruchung ausgesetzt, wobei beim Durchfahren der jeweiligen Betriebszustände der Maschine ein hohes Temperaturgefälle in der Isolierung vorliegt. Aufgrund der unterschiedlichen Ausdehnung der beteiligten Materialien treten auch mechanische Wechselbeanspruchungen auf. Dabei kommt es zum einen zu einer Scherbeanspruchung der Verklebung zwischen Leiter und Isolierung und zum anderen besteht an der Grenzfläche zwischen der Isolierung und der Nutwand des Stators die Gefahr der Abrasion. Aufgrund dieser hohen Beanspruchungen kann eine Rißbildung der Isolierung der Statorwicklungen auftreten, welche einen Kurzschluß verursacht. Folglich kommt es zum Ausfall der gesamten elektrischen Maschine, wobei die Reparatur mit einem hohen zeitlichen und kostenintensiven Aufwand verbunden ist.

### Darstellung der Erfindung

Hier setzt die Erfindung an. Der Erfindung, wie sie in den Ansprüchen gekennzeichnet ist, liegt die Aufgabe zugrunde, ein Verfahren zur Isolierung von Leiterstäben für Statorwicklungen für rotierende elektrische Maschinen zu schaffen, wobei isolierte Statorwicklungen hergestellt werden, welche die Isolierung der Statorwicklung über die vorgesehene Lebensdauer der elektrischen Maschine gewährleisten.

Diese Aufgabe wird durch das Verfahren gemäß den Merkmalen des unabhängigen Anspruchs 1 gelöst.

Die Erfindung benutzt die hohe Elastizität des Elastomers bei gleichzeitig hoher thermischer und elektrischer Beanspruchbarkeit. Bei höherer thermischer Belastung wird vorteilhaft Silikonelastomer verwendet.

Elastomere als Material für die Hauptisolierung begünstigen die Anwendung von Spritzgußverfahren. Die einzelnen Teile der Spritzgußform werden bevorzugt als Baukastensystem ausgebildet, um damit die häufiger vorkommenden Leiterstabgeometrien abzudecken.

Bevorzugt werden die Leiterstäbe durch Abstandselemente bzw. justierbare Dorne in der Gußform zentriert. Die Zentrierung muß nicht so erfolgen, daß der Hohlraum zwischen Leiterstab und Gußform an jeder Stelle die gleiche Höhe aufweist. Es ist innerhalb des Rahmens der Erfindung auch Hauptisolierungen mit unterschiedlichen Dicken um den Leiterstab bereitzustellen. Eine gleichmäßige Dicke der Hauptisolierung ist aber eine bevorzugte Ausführungsform.

In einem weiteren erfindungsgemässen Verfahren wird zwischen Isolierschicht und Leiteroberfläche ein Innenglimmschutz aufgebracht. Dies erfolgt beispielsweise durch geeignete Spritzgussverfahren, mit denen mehrere Einzelschichten übereinander gelegt werden können.

In einem besonders bevorzugten Verfahren werden die Leiterstäbe erst nach der Ummantelung mit dem Elastomer in ihre endgültige Form gebracht. Durch das Biegen der Evolventen wird die aufgebrachte Isolierung stark gedehnt. Die erfindungsgemäße Verwendung von Elastomer erweist sich hierbei als besonders vorteilhaft, da sie die mechanische, elektrische bzw. thermische Beeinträchtigung der durch das Biegen beanspruchten Isolierung reduziert bzw. gänzlich verhindert.

### Kurze Beschreibung der Zeichnungen

Die Erfindung wird nachfolgend anhand von Ausführungsbeispielen im Zusammenhang mit den Zeichnungen näher erläutert. Es zeigen:
- Figur 1a: einen Querschnitt durch eine Spritzgußform in der zwei Leiterstäbe durch Abstandselemente in der Gußform zentriert werden;
- Figur 1b: einen Längsschnitt durch eine Spritzgußform in der ein Leiterstab durch Abstandselemente in der Gußform zentriert wird;
- Figur 1c: einen Längsschnitt durch eine Spritzgußform in der ein Leiterstab durch Abstandselemente unterschiedlicher Form in der Gußform zentriert wird;
- Figur 2a: einen Querschnitt durch eine Spritzgußform in der zwei Leiterstäbe durch justierbare Dorne in der Gußform zentriert werden;
- Figur 2b: einen Längsschnitt durch eine Spritzgußform in der ein Leiterstab durch justierbare Dorne in der Gußform zentriert wird;
- Figur 3: eine Detailansicht des justierbaren Dorns aus Figur 2b; und
- Figur 4: eine Vorrichtung zum Biegen der isolierten Leitungsstäbe.

In den Figuren sind nur die für das Verständnis der Erfindung wesentlichen Elemente und Bauteile gezeigt. Die dargestellten erfindungsgemäßen Verfahren und Vorrichtungen können somit in vielfältiger Weise ergänzt oder auch in für den Fachmann offensichtlicher Weise modifiziert werden, ohne daß hierdurch der Erfindungsgedanke verlassen oder abgeändert würde.

### Wege zur Ausführung der Erfindung

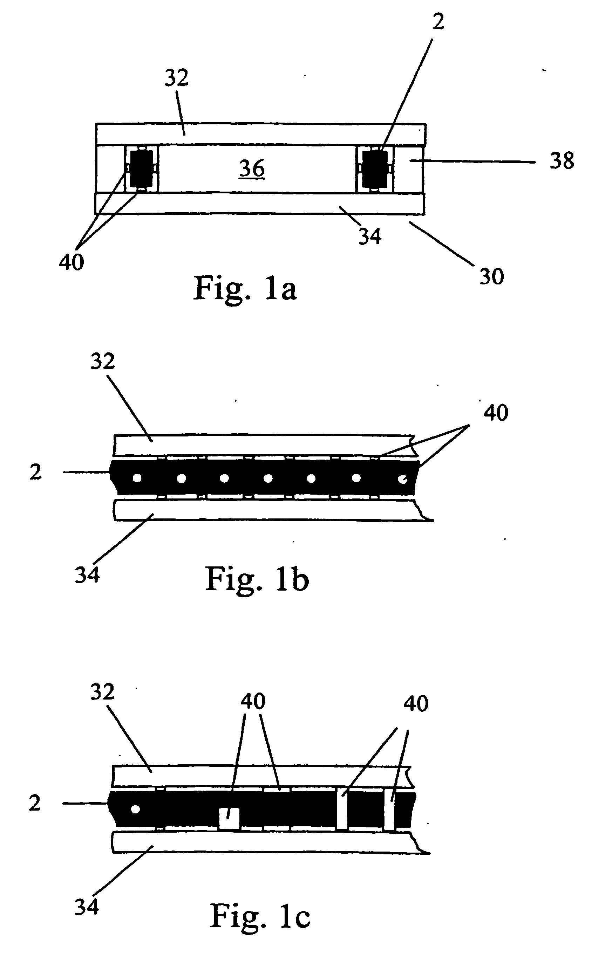

Figur 1a zeigt den Querschnitt durch eine Spritzgußform 30 in der zwei Leiterstäbe 2 durch Abstandselemente 40 in den Gußräumen zentriert sind. Die Spritzgußform 30 besteht aus einem Deckel 32 und einer Bodenplatte 34. Zwischen zwei Gußräumen ist ein Mittelteil 36 angeordnet, welches jeweils eine Seitenwand eines der benachbarten Gußräume bildet. Die beiden anderen Seitenwände der zwei Gußräume werden durch Randstücke 38 geformt.

Die Leiterstäbe selbst sind in der Regel aus einem Bündel von einzelnen, isolierten Leitern aufgebaut und weisen einen rechteckigen Querschnitt auf. Bei verroebelten Leiterstäben sind die Einzelleiter zum Teil gegenseitig verdrillt, während bei nicht verroebelten Leiterstäben die Einzelleiter ohne Verdrillung parallel zueinander verlaufen. In der Erfindung können Leiterstäbe mit Einzelleitern runden Querschnitts verwendet werden. Besonders vorteilhaft ist jedoch die Anwendung des erfindungsgemäßen Verfahrens auf Leiterstäbe mit Einzelleitern aus rechteckigem Querschnitt. Bei Verwendung von rechteckigen Querschnitten werden die Vorteile der Erfindung auch dann erzielt, wenn die Querschnitte der Einzelleiter und/oder des Leiterstabs geringfügig von der Rechtecksform abweichen. Bei einem Aufbau des Leiterstabes aus Einzelleitern sind diese vorteilhaft provisorisch miteinander verbunden, um ein gleichmäßiges und hohlraumfreies Ummanteln des Leiterstabes mit der Hauptisolierung zu ermöglichen, z.B. durch provisorisches Verkleben der Einzelleiter mit einem elastischen Material oder einem gegen Scherkräfte mechanisch schwachem Kleber, wodurch das spätere Verbiegen nicht behindert wird. Alternativ kann auch ein Kleber verwendet werden, der bei mäßiger Erwärmung (z.B. vor dem Biegen) seine Klebekraft verliert und damit den Biegevorgang begünstigt.

Die in Figur 1a gezeigte Spritzgußform zeigt 2 Gußräume. Die Anzahl der Gußräume pro Spritzgußform kann aber jederzeit variiert werden. Eine Reduzierung auf einen Gußraum erfolgt z.B. durch Herausnahme des Mittelteils 36 und Verschieben von zumindest einem der beiden Randstücke 38 in Richtung des anderen Randstücks. Eine Vermehrung der Gußräume hingegen erfolgt z.B. durch Verwendung von mehreren, in ihrer Breitenausdehnung reduzierten Mittelteilen 36. So kann der in Figur 1 a gezeigte Mittelteil 36 durch zwei schmalere Mittelteile ersetzt werden, die zwischen sich eine weitere Gußform ausbilden.

Die einzelnen Teile der Spritzgußform 30, d.h. insbesondere Deckel 32, Bodenplatte 34, Mittelteil(e) 36 und Randstücke 38 können in ihren geometrischen Abmessungen so variiert werden, daß sie Elemente eines Baukastensystems bilden und so eine Vielzahl von möglichen Stabgeometrien (Querschnitt, Länge) abdekken. Die Verwendung von Mittelteilen 36 und Randstücken 38 unterschiedlicher

Höhen erlaubt bei sonst gleichbleibenden geometrischen Ausdehnungen der Spritzgußform die Beschichtung von Leiterstäben mit unterschiedlichen Querschnitten z.B. Leiterstäbe 2 gleicher Breite aber unterschiedlicher Höhe. Alternativ kann ein Leiterstab entsprechender Höhe, welcher 90 Grad um seine Längsachse gedreht ist, in die Gußform gelegt werden, um so Leiterstäbe 2 gleicher Höhe aber unterschiedlicher Breite zu beschichten. Kleinere Variationen im Leiterquerschnitt können auch durch größere Schichtdicken der zu gießenden Hauptisolierung aufgefangen werden. Durch Kombination von Mittelteilen 36 und Randstücken 38 unterschiedlicher Höhe mit Mittelteilen 36 und Randstücken 38 unterschiedlicher Breite kann eine Vielzahl verschiedenster Querschnitte von Leiterstäben beschichtet werden. Weiterhin kann die Flexibilität des Baukastensystems für die Spritzgußformen durch Verwendung von Abstandsplatten erhöht werden. Diese Platten können vorteilhaft an die Seiten-, Boden- bzw. Deckenplatten der Gußräume angeordnet werden, um den Gußraum in seiner Breite oder Höhe zu verkleinern.

In einer bevorzugten Ausführung sind die Isolierdicken auf den Schmalseiten und Breitseiten des Leiterstabes gleich. In einer besonders vorteilhaften Ausführung ist die Isolierungsdicke auf den Schmalseiten der Leiter größer als auf den Breitseiten, womit an den Leiterkanten die elektrische Feldüberhöhung abgebaut wird, ohne die Abfuhr der Wärme über die Breitseite zu behindern.

Figur 1 b zeigt einen Längsschnitt durch einen der in Figur 1 a gezeigten Gußräume. Die zylindrischen Abstandselemente 40 zentrieren dabei den Leiterstab 2 so in dem Gußraum, daß die Schichtdicke der Hauptisolierung auf allen Seiten gleich hoch ist. Durch Verwendung unterschiedlich hoher Abstandselemente kann bei Bedarf eine Hauptisolierung unterschiedlicher Schichtdicke um den Leiterstab gelegt werden. Es ist dabei nicht notwendig zylindrische Abstandselemente 40 zu verwenden. Abstandselemente mit quadratischem oder rechteckigem Querschnitt erfüllen den selben Zweck, erleichtern jedoch das Beabstanden der Leiterstäbe von den Seitenwänden, da sie mit einer ihrer Schmalseite auf dem Boden der

Gußform aufgelegt werden können, ohne davon zu rollen. Abstandselemente 40 mit rechteckigem Querschnitt sind in Figur 1 c gezeigt. Alternativ dazu können Abstandselemente verwendet werden, die den Leiterstab völlig umschließen. Bevorzugt werden vollständig umschließende Abstandselemente 40 auf einer ihrer Seiten aufgeschnitten, um sie leichter um den Leiterstab zu legen.

Als Material für die Hauptisolierung wird ein Elastomer verwendet. Das Elastomer zeichnet sich durch hohe Elastizität aus. Darüber hinaus weist es eine hohe elektrische und thermische Beständigkeit auf. Insbesondere bei thermisch hoch belasteten Maschinen werden bevorzugt Silikonelastomere verwandt. Gerade die vorteilhafte Verwendung von Elastomer (im Gegensatz zu anderen Materialien) erlaubt die Anwendung von Spritzgußverfahren und wird den hohen Anforderungen an die Resistenz des Materials und an seine mechanische Flexibilität gerecht. Bei den Elastomeren kann es sich um kalt- oder warmvernetzende Typen handeln. Die Vernetzung bei den kaltvernetzenden Typen wird z.B. durch Vermischung zweier Komponenten gestartet, wobei eine der Komponenten einen Vernetzer enthält. Bei den warmvemetzenden Typen kann das Elastomer bereits in der Spritzgußform und/oder nach Ummantelung des Leiterstabs erwärmt werden. Letzteres erfolgt vorteilhaft durch Heißluft (Ofen) oder durch resistive bzw. induktive Erwärmung des Leiterstabes.

Die Materialeigenschaften der Hauptisolierung können durch Zugabe von chemisch aktiven (z.B. Kieselsäure) und passiven (z.B. Quarzsand) Füllstoffen so eingestellt werden, daß sie den entsprechenden mechanischen Anforderungen der elektrischen Maschinen genügen, in denen die mit der Hauptisolierung versehenen Statorwicklungen eingebaut werden.

Die Zentrierung der Leiterstäbe im Gußraum (bei einer Hauptisolierung gleicher Schichtdicke) bzw. die Beabstandung des Leiterstabes von den einzelnen Wänden des Gußraums geschieht, wie bereits erwähnt, durch die Verwendung von Abstandselementen 40 unterschiedlicher Form und Höhe, die in geeignetem Abstand voneinander auf dem Stab oder im Gußraum plaziert werden. Bevorzugt sind die Abstandselemente aus dem gleichen Material wie die Hauptisolierung gefertigt.

Durch Teilvernetzung des Materials erhalten die Abstandselemente eine gewisse Formstabilität. Andererseits weisen sie noch ausreichend reaktive Bindungen auf, um mit dem angegossenen Material der Hauptisolierung eine feste chemische Verbindung einzugehen. In Abhängigkeit vom verwendeten Material kann durch einfache Versuche herausgefunden werden, welcher Vernetzungsgrad im Material der Abstandselemente vorliegen muß, um an den Grenzflächen die selben bzw. gleichwertige mechanische und elektrische Festigkeiten zu erzielen wie im homogenen, nicht durch Grenzflächen durchsetzten Material der Hauptisolierung.

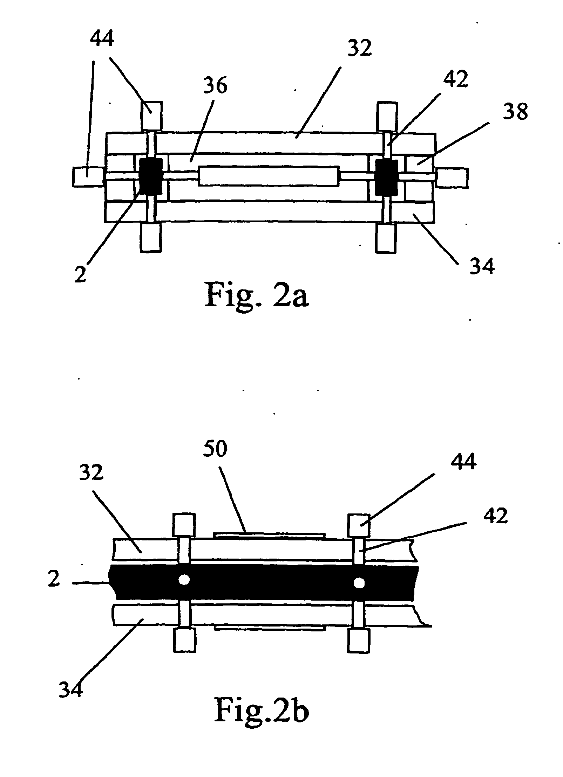

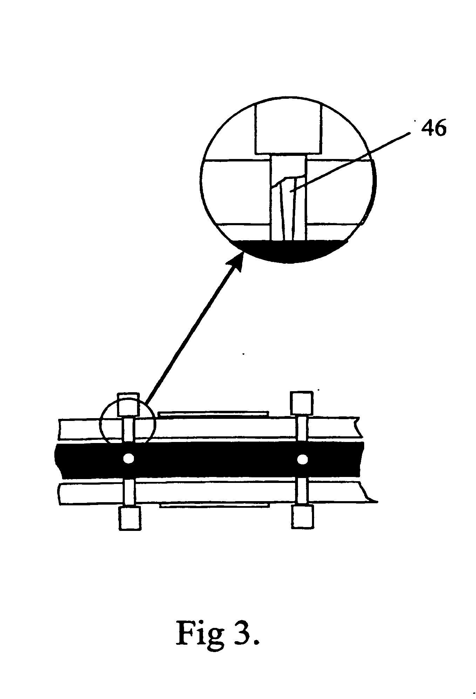

In Figur 2 a und b werden die Leiterstäbe 2 durch justierbare Dorne 42 im Gußraum der Spritzgußform zentriert bzw. von den Wänden des Gußraums beabstandet. Ein Stellglied 44 erlaubt eine genaue Justierung der einzelnen Dorne 42, die auch bei geschlossener Spritzgußform definiert bewegt werden können. Während des Einspritzvorgangs des Elastomers und der einsetzenden Vernetzung wird der Leiterstab von den Dornen in der gewünschten Lage gehalten. Bei fortschreitender Vernetzung erreicht das als Material für die Hauptisolierung eingespritzte Elastomer eine Festigkeit, die den Leiterstab auch ohne Dorne in seiner gewünschten Lage hält. Nachdem die Hauptisolierung diese Festigkeit erreicht hat, werden die Dorne 42 zurückgezogen und die entstehenden Hohlräume durch flüssiges Elastomer aufgefüllt. Das Einspritzen des flüssigen Materials in die Hohlräume erfolgt durch in den Dornen 42 befindliche Einspritzkanäle 46 (siehe Fig. 3). Das im Bereich der Dorne eingespritzte Material kann flüssig oder gelförmig sein, muß aber noch ausreichend reaktionsfähige Verbindungen aufweisen, damit die mechanischen und elektrischen Eigenschaften der Hauptisolierung an der Grenzfläche denen des homogenen Materials der Hauptisolierung entsprechen. Das angrenzende Material um die Dorne herum darf bereits fest sein und es muß noch reaktionsfähig sein. Zur Förderung der Vernetzung an der Grenzfläche kann beispielsweise mittig zwischen zwei Distanzdornen eine Heizregion 50 angeordnet werden. Die Wärme und damit die Vernetzungsfront breitet sich somit von der Heizregion ausgehend in Richtung der Dorne aus, so daß dort die Vernetzung mit einer zeitlichen Verzögerung einsetzt und das sich in der Umgebung der Dorne befindliche Material noch ausreichend mit dem frisch durch den Einspritzkanal 46 zugeführten Elastomer reagieren kann. Alternativ dazu oder ergänzend können die Dorne 42 gekühlt werden. Durch die Kühlung wird erreicht, daß das Material im Dorn und um den Dorn noch nicht vernetzt.

Die in Figuren 1 und 2 gezeigten Spritzgußformen sind bevorzugt an ihren Längsenden offen gestaltet. Sie werden beim Spritzgießen durch Dichtkappen abgeschlossen, die den Leiter druckfest umschließen. Dies erlaubt die Bearbeitung von Stäben unterschiedlicher Länge. Um den Leiterstab entlang seiner vollständigen Länge zu isolieren kann die Hauptisolierung in einem oder mehreren Schritten aufgebracht werden bzw. werden mehrere Spritzgußformen aus dem Baukastensystem zu einer Teil- oder Komplettspritzgußform zusammengesetzt. Die entstehenden Nahtstellen können entsprechend obig beschriebener Vernetzungsverfahren ausgebildet werden. Dies gewährleistet auch an den Nahtstellen die geforderten Materialeigenschaften.

In manchen Anwendungen werden die Leiterstäbe bevorzugt mit Nutglimmschutz und Absteuerung (Bügelglimmschutz), sowie gegebenenfalls mit Innenglimmschutz versehen. Der Innenglimmschutz einer Statorwicklung ist in der Regel eine leitfähige Materialschicht die sich zwischen Hauptisolierung und Leiterstab befindet. Sie sorgt für einen um den Leiterstab liegenden, definierten Potentialbelag und verhindert elektrische Entladungen, die durch zwischen dem Leiterstab und der Hauptisolierung liegende Hohlräume verursacht werden können. Der Nut- bzw. Außenglimmschutz einer Statorwicklung ist in der Regel eine zwischen Hauptisolierung und Statornut angeordnete leitfähige Materialschicht. Mit dem Außenglimmschutz, welcher wiederum einen definierten Potentialbelag erzeugt, sollen elektrische Entladungen verhindert werden, die beispielsweise durch unterschiedliche Abstände des auf hohem Potential liegenden, isolierten Leiterstabes von der auf Masse liegenden Statornut hervorgerufen werden könnten. Die Absteuerung (Bügelglimmschutz) verhindert in der Regel elektrische Entladungen am Nutaustritt eines Leiterstabs. Im Rahmen der Erfindung verwendete Möglichkeiten zur Aufbringung solcher Schutzschichten sind beispielsweise leitfähige bzw. halbleitfähige Anstriche auf Elastomerbasis, entsprechende Bänder (u.U. selbstverschweißend) die durch Strahlung oder Wärme vernetzt werden können. Alternativ können kalt- oder warmschrumpfende Schläuche (z.B. für Stäbe) bzw. Manschetten (z.B. für Spulen) verwendet werden. Bei dem Gebrauch von Schrumpfschläuchen bzw. Manschetten für den Innenglimmschutz können diese vorteilhaft auf ihrer Innenseite mit einem fließfähigen, plastischen Material versehen werden, um auf der Oberfläche des Leiterstabes befindliche Hohlräume aufzufüllen. Grundsätzlich ist dies auch beim Außenglimmschutz möglich.

In einer weiteren bevorzugten Ausgestaltung des Verfahrens werden Innenglimmschutz, Hauptisolierung und/oder Außenglimmschutz mittels mehrerer nacheinander durchgeführter Spritzgußverfahren aufgebracht. Dies kann in verschiedenen Spritzgußformen mit unterschiedlichem Querschnitt erfolgen oder in ein und derselben Form, wobei dann der Gußraum während der entsprechenden Spritzgußschritte mit Füllprofilen (Abstandsplatten) versehen wird, um Platz für die folgende Schicht zu lassen. Weiterhin besteht die Möglichkeit den Gußraum mit beweglichen Sektionen auszustatten. Bewegliche Sektionen sind Teile einer Gießform, die so angeordnet werden können, daß z.B. nur im Bereich der Absteuerung (Nutglimmschutzende bis Ende Absteuerung) eine zusätzliche Schicht eingespritzt wird.

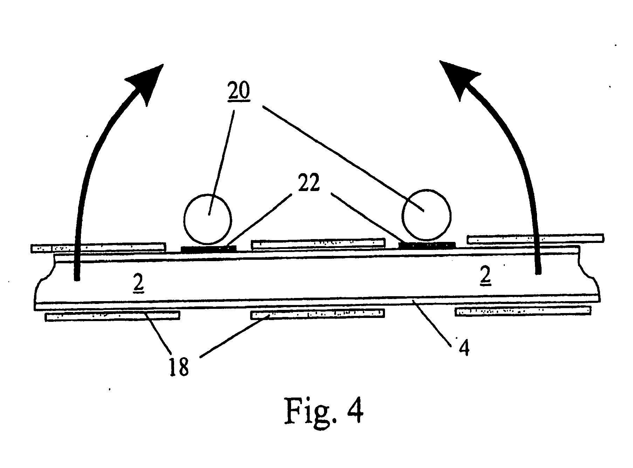

Figur 4 zeigt eine gegenüber dem Stand der Technik modifizierte Biegevorrichtung. Die isolierten Leiterstäbe werden in die Spannbacken 18 der Biegevorrichtung gelegt und dort durch Bewegung der Spannbacken 18 gegenüber den Radienwerkzeugen 20 in ihre endgültige Form gebracht. Zwischen den Radienwerkzeugen 20 und der Isolierschicht 4 des Leiterstabs 2 ist eine Schutzlage 22 angeordnet, die den an den Radienwerkzeugen entstehenden Druck flächenmäßig verteilt und so ein übermäßiges Quetschen der Isolierschicht verhindert. Durch die gleichmäßig verteilte mechanische Belastung der Isolierschicht aus Elastomer werden Beschädigungen der Isolierschicht verhindert. Das Biegen der Evolvente führt zu sehr großen Dehnungen in der Isolierschicht, die bei herkömmlichen Materialien wie Hochtemperatur-Thermoplaste zu Brüchen in der Isolierschicht führen. Polyethylen hätte die notwendige Flexibilität, jedoch nicht die für übliche elektrische Maschinen erforderliche Temperaturbeständigkeit, könnte jedoch für Maschinen mit geringer thermischer Ausnutzung (T < 90° C) prinzipiell in ähnlicher Weise eingesetzt werden. Gleiches gilt für andere, flexible Thermoplaste.

Ist der Leiterstab aus einem Bündel von Einzelleitern aufgebaut, so erfolgt durch das Biegen der bereits mit der Hauptisolierung versehenen Leiterstäbe sowohl eine Relativverschiebung der Einzelleiter untereinander als auch der an der Oberfläche des Leiterstabes liegenden Einzelleiter gegenüber der Hauptisolierung. Vorteilhaft ist die zwischen Leiterstab und Hauptisolierung liegende Grenzschicht so beschaffen, daß sie eine reibungsreduzierte Verschiebung der Einzelleiter gegenüber der Hauptisolierung ermöglicht. Dies kann z.B. durch Behandlung des Leiterstabs mit Trennmitteln erreicht werden. Das Auftreten von Spalten durch diese Relativbewegung an der Grenzfläche zum Leiter ist bedeutungslos, wenn in diesem Bereich ein fest mit der Hauptisolierung verbundener Innenglimmschutz verwendet wird. Ohne Innenglimmschutz ist die Verschiebung zumeist unkritisch, da im Biegebereich (nach der Absteuerung) das Feld reduziert ist.

Bei Verwendung eines Innenglimmschutzes weist dieser vorteilhaft eine gute Haftung gegenüber der Hauptisolierung auf, besitzt jedoch eine geringere Haftung gegenüber der Oberfläche des Leiterstabes. Dies wird vorzugsweise dadurch erreicht, daß Isolierung und Glimmschutz auf der gleichen chemischen Materialbasis beruhen (chemisch Bindung), während Innenglimmschutz und Drahtlackierung jeweils eine unterschiedliche Materialbasis mit vorzugsweise geringer Affinität besitzen. Trennmittel können diesen Effekt verstärken. Die Leiterstäbe selbst sind im Bereich der späteren Biegestellen bevorzugt nicht verroebelt.

In einer weiteren nicht gezeigten Ausführungsform sind Spritzgußformen vorgesehen mit denen bereits gebogene Abschnitte des Leiterstabs mit Hauptisolierung versehen werden können. Hierfür weist die Spritzgußform dreidimensional geformte Sektionen auf, die bevorzugt an gewisse Toleranzen des Leiterstabs angepaßt werden können. Ein Teil der durch Verwendung von einfachen und billigen Spritzgußformen gewonnenen Vorteile geht bei den für gebogene Leiterstäbe ausgelegten Spritzgußformen verloren. Jedoch kann dies bei großer Stückzahl wieder kompensiert werden, insbesondere wenn die an bereits gebogene Leiterstäbe angepaßten Formen durch Standardisierung für mehrere Typen verwendet werden können.

Die komplizierten Formen rechtfertigen sich auch dann, wenn Innenglimmschutz, Isolierung und Außenglimmschutz in einem Arbeitsgang aufgebracht werden können. Dies erfolgt zum Beispiel durch bewegliche Sektionen mittels derer die Schichten durch Spritzen, Vernetzen, Sektion verschieben, Spritzen, Vernetzen, ... aufgebracht werden. Alternativ kann ein Mehrkomponenten Spritzgießverfahren angewendet werden.

### Bezugszeichenliste

- 2: Leiterstab
- 4: Isolierschicht
- 18: Spannbacken
- 20: Radienwerkzeug
- 22: Schutzlage
- 30: Spritzgußform
- 32: Deckel
- 34: Bodenplatte
- 36: Mittelteil
- 38: Randstück
- 40: Abstandselement
- 42: Dorn
- 44: Stellglied
- 46: Einspritzkanal
- 50: Heizregion

## Patentansprüche

1. Verfahren zum Aufbringen der Hauptisolierung von Leiterstäben für Statorwicklungen rotierender elektrischer Maschinen, wobei die Leiterstäbe mehrere gegeneinander isolierte Einzelleiter sowie einen rechteckigen Querschnitt aufweisen **dadurch gekennzeichnet, daß** das Verfahren die folgenden Schritte umfaßt;
a) Einbringen eines endlichen Leiterstabs in eine Spritzgußform;
b) Zentrierung des Leiterstabs in der Spritzgußform, so daß zwischen Leiterstab und Spritzgußform ein Hohlraum zur Aufnahme eines Isoliermaterials verbleibt;
c) Auffüllen des Hohlraums mit einem Elastomer zur Ausbildung der Hauptisolierung.

2. Verfahren nach Anspruch 1, wobei das Auffüllen des Hohlraums mit einem Silikonelastomer erfolgt

3. Verfahren nach einem der vorstehenden Ansprüche, wobei die Spritzgußform an den Enden offen ist.

4. Verfahren nach einem der vorstehenden Ansprüche, wobei die Spritzgußform aus Bestandteilen eines Baukastensystems zusammengesetzt ist.

5. Verfahren nach einem der vorstehenden Ansprüche, wobei die Isolationsdicken auf Breitseite und Schmalseite gleich sind, bzw. bevorzugt auf den Schmalseiten des Leiterstabes größer sind als auf den Breitseiten.

6. Verfahren nach einem der vorstehenden Ansprüche, wobei die Zentrierung des Leiterstabs mittels Abstandselementen erfolgt, durch die der Leiterstab im Gußraum der Spritzgußform gelagert wird, wobei die Abstandselemente Bestandteil der Hauptisolierung werden.

7. Verfahren nach Anspruch 6, wobei die Abstandselemente aus einem Material mit reaktiven chemischen Bindungen gefertigt ist, so daß es sich mit dem Elastomer zur Ausbildung der Hauptisolierung verbinden kann.

8. Verfahren nach einem der Ansprüche 6 - 7, wobei die Abstandselemente aus dem selben Material wie die Hauptisolierung gefertigt sind.

9. Verfahren nach einem der Ansprüche 1 - 5, wobei die Zentrierung des Leiterstabs mittels justierbarer Dorne erfolgt, durch die der Leiterstab im Gußraum der Spritzgußform gelagert wird.

10. Verfahren nach Anspruch 9, wobei das Einspritzen des Isoliermaterials über in den Dornen ausgebildete Einspritzkanäle erfolgt, wobei die Dorne nach erfolgtem Einspritzen des Isoliermaterials zurückgezogen werden, so daß Hohlräume entstehen, welche Hohlräume anschließend ebenfalls mit Isoliermaterial gefüllt werden.

11. Verfahren nach einem der vorstehenden Ansprüche, wobei ein Innenglimmschutz zwischen Isolierschicht und Leiteroberfläche aufgebracht wird, wobei die Haftung zwischen Innenglimmschutz und Isolierschicht größer ist als die Haftung zwischen Innenglimmschutz und Leiteroberfläche.

12. Verfahren nach einem der vorstehenden Ansprüche, wobei das Verfahren einen weiteren Schritt umfaßt;
d) Biegen der Evolventen der isolierten Leiterstäbe.

13. Verfahren nach einem der vorstehenden Ansprüche, wobei Leiterstäbe bestehend aus Einzelleitern verwendet werden, wobei die Einzelleiter bevorzugt rechteckigen Querschnitt aufweisen.

14. Verfahren nach Anspruch 13, wobei die Einzelleiter provisorisch miteinander verbunden sind.

15. Verfahren nach einem der Ansprüche 13 oder 14, wobei die Leiterstäbe im Bereich der Evolvente nicht verroebelt sind.

16. Verfahren nach Anspruch 12, wobei zum Biegen der Evolventen Radienwerkzeuge 20 eingesetzt werden und im Bereich der Radienwerkzeuge 20 eine Schutzlage 22 angeordnet wird.

## Claims

1. Method for applying the main insulation of conductor bars for stator windings of rotating electrical machines, the conductor bars having a number of individual conductors that are insulated with respect to one another and a rectangular cross section, **characterized in that** the method comprises the following steps:
a) introducing a finite conductor bar into an injection mould;
b) centring the conductor bar in the injection mould, so that a void for receiving an insulating material remains between the conductor bar and the injection mould;
c) filling the void with an elastomer to form the main insulation.

2. Method according to Claim 1, the filling of the void taking place with a silicone elastomer.

3. Method according to one of the preceding claims, the injection mould being open at the ends.

4. Method according to one of the preceding claims, the injection mould being made up of component parts of a modular system.

5. Method according to one of the preceding claims, the thicknesses of the insulation being the same on the wide side and narrow side, or preferably greater on the narrow sides of the conductor bar than on the wide sides.

6. Method according to one of the preceding claims, the centring of the conductor bar taking place by means of spacing elements, by which the conductor bar is mounted in the cavity of the injection mould, the spacing elements being a component part of the main insulation.

7. Method according to Claim 6, the spacing elements being fabricated from a material with reactive chemical linkages, so that it can bond with the elastomer to form the main insulation.

8. Method according to either of Claims 6-7, the spacing elements being fabricated from the same material as the main insulation.

9. Method according to one of Claims 1-5, the centring of the conductor bar taking place by means of adjustable pins, by which the conductor bar is mounted in the cavity of the injection mould.

10. Method according to Claim 9, the injection of the insulating material taking place via injection channels formed in the pins, the pins being withdrawn once injection of the insulating material has taken place, so that voids are produced, which voids are subsequently likewise filled with insulating material.

11. Method according to one of the preceding claims, an inner corona protection being applied between the insulating layer and the surface of the conductor, the adhesion between the inner corona protection and the insulating layer being greater than the adhesion between the inner corona protection and the surface of the conductor.

12. Method according to one of the preceding claims, the method comprising a further step:
d) bending of the involute of the insulated conductor bars.

13. Method according to one of the preceding claims, conductor bars comprising individual conductors being used, the individual conductors preferably having a rectangular cross section.

14. Method according to Claim 13, the individual conductors being provisionally connected to one another.

15. Method according to either of Claims 13 and 14, the conductor bars not being transposed in the region of the involute.

16. Method according to Claim 12, bending tools 20 being used for the bending of the involute and a protective layer 22 being arranged in the region of the bending tools 20.

## Revendications

1. Procédé d'application de l'isolant principal de barres conductrices pour enroulements statoriques de machines électriques rotatives, les barres conductrices comportant plusieurs conducteurs simples isolés les uns par rapport aux autres et étant de section rectangulaire, **caractérisé en ce que** le procédé comprend les étapes suivantes :
a) on introduit dans un moule d'injection une barre conductrice de longueur limitée ;
b) on centre la barre conductrice dans le moule d'injection de manière à laisser entre la barre conductrice et le moule d'injection une cavité apte à recevoir un isolant ;
c) on remplit la cavité d'un élastomère dans le but de former l'isolant principal.

2. Procédé selon la revendication 1, dans lequel on remplit la cavité d'un élastomère silicone.

3. Procédé selon l'une quelconque des revendications précédentes, dans lequel le moule d'injection est ouvert à ses extrémités.

4. Procédé selon l'une quelconque des revendications précédentes, dans lequel le moule d'injection est composé de parties constitutives d'un système modulaire.

5. Procédé selon l'une quelconque des revendications précédentes, dans lequel l'épaisseur de l'isolant est la même sur le petit et sur le grand côté ou plutôt de préférence plus grande sur les petits côtés de la barre conductrice que sur les grands côtés.

6. Procédé selon l'une quelconque des revendications précédentes, dans lequel la barre conductrice est centrée moyennant des éléments d'écartement qui servent à la mise en place de la barre conductrice dans la cavité du moule d'injection, les éléments d'écartement formant alors parties constitutives de l'isolant principal.

7. Procédé selon la revendication 6, dans lequel les éléments d'écartement sont confectionnés en une matière ayant des liaisons chimiques réactives lui permettant de se lier avec l'élastomère afin de former l'isolant principal.

8. Procédé selon l'une quelconque des revendications 6 - 7, dans lequel les éléments d'écartement sont confectionnés dans la même matière que l'isolant principal.

9. Procédé selon l'une quelconque des revendications 1 - 5, dans lequel la barre conductrice est centrée au moyen de mandrins ajustables servant à la mise en place de la barre conductrice dans la cavité du moule d'injection.

10. Procédé selon la revendication 9, dans lequel l'isolant est injecté par des canaux d'injection formés dans les mandrins, ces mandrins étant retirés une fois l'isolant injecté et laissant des cavités que l'on remplit ensuite également d'isolant.

11. Procédé selon l'une quelconque des revendications précédentes, dans lequel on dépose entre la couche isolante et la surface du conducteur une protection intérieure contre l'effet couronne, l'adhérence entre la protection intérieure contre l'effet couronne étant supérieure à l'adhérence entre la protection intérieure contre l'effet couronne et la surface du conducteur.

12. Procédé selon l'une quelconque des revendications précédentes, ce procédé comprenant encore l'étape consistant à
d) cintrer les développantes des barres conductrices isolées.

13. Procédé selon l'une quelconque des revendications précédentes, dans lequel on utilise des barres conductrices constituées de conducteurs simples, les conducteurs simples étant de préférence de section rectangulaire.

14. Procédé selon la revendication 13, dans lequel les conducteurs simples sont provisoirement reliés ensemble.

15. Procédé selon l'une quelconque des revendications 13 ou 14, dans lequel les barres conductrices ne sont pas enchevêtrées dans la région de la développante.

16. Procédé selon la revendication 12, dans lequel on utilise des outils servant à définir le rayon de cintrage 20 pour cintrer les développantes et on dispose une couche protectrice 22 dans la région des outils servant à définir le rayon de cintrage 20.
